# EUROPEAN PATENT SPECIFICATION

(11) **EP 3 685 104 B1**
(45) Date of publication and mention of the grant of the patent: **10.05.2023**
(21) Application number: 18786887.2
(22) Date of filing: 19.09.2018
(51) Int. Cl.: F24D 19/00, F24H 9/20, F22B 37/48, F22B 1/28, A47J 31/60, F24H 9/00, F22B 37/54, F22B 37/44, F22B 35/08, F22B 1/30, F16K 5/06, F16K 35/00

(54) **BOILER**
KESSEL
CHAUDIÈRE

(30) Priority: 20.09.2017 IT 201700104917
(43) Date of publication of application: 29.07.2020
(73) Proprietor: De' Longhi Appliances S.r.l. Con Unico Socio, 31100 Treviso (IT)
(72) Inventor: DE' LONGHI, Giuseppe, 31100 Treviso (IT); LORENZON, Antonio, 31100 Treviso (IT); GIROTTO, Riccardo, 31100 Treviso (IT)
(74) Representative: Petraz, Gilberto Luigi
(86) International application number: PCT/IT2018/050170
(87) International publication number: WO 2019/058403

(56) References cited:
- EP-A1- 0 483 622
- EP-A1- 2 527 733
- WO-A1-99/39139
- WO-A1-2007/007241
- CN-A- 103 604 218
- DE-U1- 20 017 279

## Description

### FIELD OF THE INVENTION

The present invention concerns a boiler to generate steam and/or to heat water, which can be used in household appliances or professional machines, such as, for example, apparatuses for ironing or cleaning, coffee machines, steamers for cooking food, steam ovens, or suchlike.

### BACKGROUND OF THE INVENTION

Boilers used to selectively generate steam and/or to heat water in household appliances and professional machines normally comprise a metal container, hermetically sealed, provided with at least one aperture to feed water inside it, an exit to deliver steam and possibly a discharge aperture selectively opening/closing to discharge the water from the container.

A heating element is normally associated with the metal container, generally a resistance or an electric plate, which acts as a heat source and which can be selectively activated to generate the desired quantity and/or quality of steam and/or to heat the water to the desired temperature.

It is known that, during the use of the boiler, formations of limescale promoted by heating the water are generated inside the container. These limescale formations mainly consist of calcium carbonate and/or other minerals such as magnesium, potassium, silicon, etc., which are normally found dissolved in the water.

The limescale formations can remain in suspension or can be deposited on the internal surfaces of the container to form increasingly thick encrustations. In particular, the formation of the incrustations is more facilitated in correspondence with the hottest portions of the container.

The formation of layers of limescale in correspondence with the portion where the heating element is associated with the container reduces the heating effectiveness of the water, thus slowing down the transmission of heat with consequent waste of energy.

In order to remove the limescale, it is known to use an extractable elongated collection element, also shaped like a pipe, configured to be inserted inside the container in order to collect the limescale and remove it from inside the container.

However, this solution is not optimal for limescale removal, nor is it at least partly automatic or automated. In fact, it involves a high involvement of the user who must first unscrew at least one closing cap of the exit aperture (an operation that can prove particularly difficult and risky), move the whole boiler to a sink, possibly shake the boiler to rinse it efficiently and, finally, firmly close the closing cap.

These operations, which make cleaning the boiler complicated, discourage the user who often does not perform the cleaning with the required frequency, reducing the efficiency of limescale removal and, therefore, the life itself of the boiler.

Furthermore, during the cleaning of the boiler there is a risk that the user will suffer electric shocks since he/she has not disconnected the boiler from the power supply. Furthermore, the user can be possibly splashed by still hot water, which can cause burns.

Boilers are known from EP-A-2 527 733, WO-A-2007/007241, DE-U-200 17 279, CN-A-103 604 218, EP-A-0 483 622 and WO-A-99/39139, provided with valves that can be selectively driven to perform cleaning cycles and limescale removal.

Document WO 2007/007241 A1 **discloses a boiler according to the preamble of claim 1.** There is therefore the need to find solutions that facilitate the user in the operations to discharge and cyclically clean a boiler for generating steam.

One purpose of the present invention is to obtain a boiler which ensures its effective, fast and easy cleaning, guaranteeing safe conditions for a user.

Another purpose of the present invention is to obtain a boiler which allows easy removal of the limescale inside it without requiring particular skills, efforts or risks for the user.

Another purpose of the present invention is to obtain a boiler that is economical, reliable and durable over time.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purposes, the present invention concerns a boiler to generate steam and/or to heat water comprising a metal container provided with at least one feed aperture to introduce water inside it, a discharge aperture and a steam delivery aperture.

The boiler also comprises at least one heating element associated with the container.

According to one aspect of the present invention, the boiler also comprises a discharge collector connected to the discharge aperture and defining a channel configured for the water and any possible solid particles and/or aggregates to pass through.

According to another embodiment of the present invention, the boiler also comprises a valve device associated with the discharge collector and configured to selectively open/close the channel and to selectively put it into communication with the outside.

In this way, advantageously the water and any possible solid particles and/or aggregates contained inside the container can be discharged, when the need arises to carry out this operation, thanks to the controlled drive of the valve device.

The presence of the valve device, selectively drivable, to replace a conventional stopper, allows to reduce the risk of a user coming into direct contact with the water and with any particles exiting the container, thus avoiding the risk of burns due to the high temperatures.

The presence of the valve device also reduces the activities and efforts needed by the user to open the boiler and make the interior accessible, thus facilitating the operation of emptying it. This presence also makes it possible to automate, with pre-determined times, the entire discharge and cleaning cycle of the boiler, reducing the activities required by the user to a minimum.

According to one aspect of the present invention, the discharge aperture is disposed on a lower portion of a lateral wall of the container, in proximity to a bottom wall of the container.

According to another aspect, the discharge collector is substantially L-shaped and comprises a first segment inclined downward, or horizontal, connected to the discharge aperture, and a second segment connected to the first segment substantially L-shaped with respect to the latter, so as to define an exit aperture of the discharge channel positioned, during use, below the discharge aperture and facing downward.

In this way, advantageously, the discharge of the water from the container is facilitated both by the disposition of the discharge aperture below the level of the water inside the container, and by the L shape of the discharge collector. Therefore, a user does not have to carry out dangerous operations to shake and/or incline the boiler, risking hurting him/herself and/or spilling the water in an uncontrolled way around the boiler.

According to one embodiment, the valve device comprises a main body, a shutter element provided with a through hole, and a rotating shaft configured to selectively make the shutter element rotate.

The valve device configured in this way guarantees a greater seal of the container, preventing accidental leaks of water from the discharge aperture.

Moreover, by means of the perforated shutter element and a rotary drive thereof it is possible to more precisely define the passage section of the water and of any particles exiting through the channel.

The valve device made in this way is less subject to wear, considerably reducing maintenance operations.

The rotatable shutter element prevents the deposit of limescale on the bottom of the passage channel, since the rotary drive of the shutter element allows to mechanically remove the limescale which tends to deposit on the bottom of the passage channel.

In some embodiments, the valve device has motorized movement means, or by means of an actuator, and can be selectively opened and closed by the selective drive of the movement means.

In this way, it is easy and safe for a user to drive the valve device.

In other embodiments, the valve device has clamping means able to be selectively activated that allow the subsequent manual drive only when safety conditions for the user have been reached.

According to another embodiment, the boiler comprises a container to collect the water and any possible residues exiting from the container through the discharge aperture. The collector container is advantageously connected in a sealed manner to the discharge collector of the valve device.

In this way, advantageously the discharge of the water and any particles is made even more automatic and safe for a user, since the risk of electric shocks or burns due to erroneous operations by the user is avoided.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a perspective view of a boiler in accordance with a variant embodiment;
- fig. 2 is a cross section view of the boiler in fig. 1;
- fig. 3 is a perspective view of a boiler in accordance with another variant embodiment;
- fig. 4 is a cross section view of the boiler in fig. 3;
- fig. 5 is a cross section view of a detail of the boiler in accordance with another variant embodiment.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

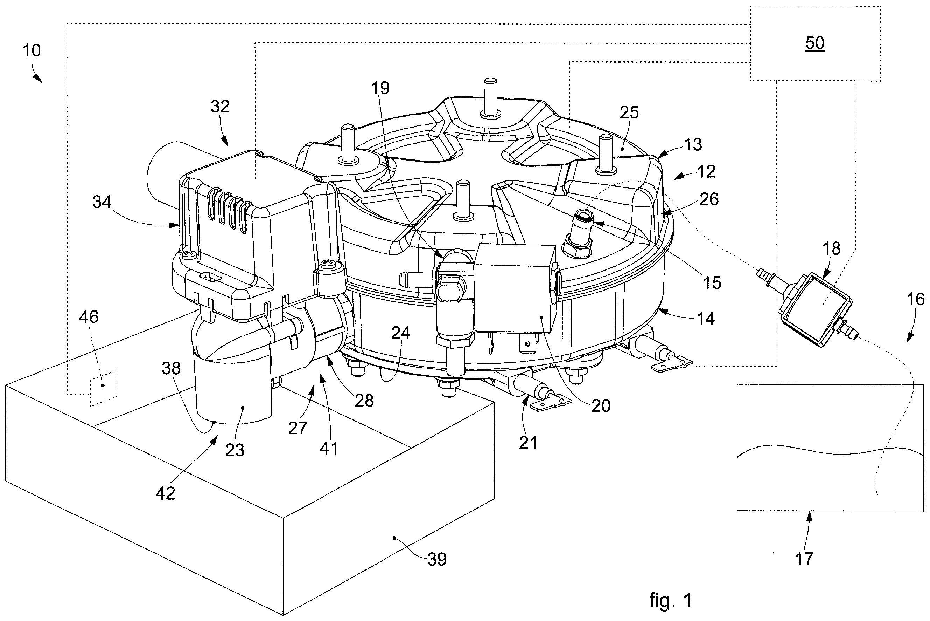

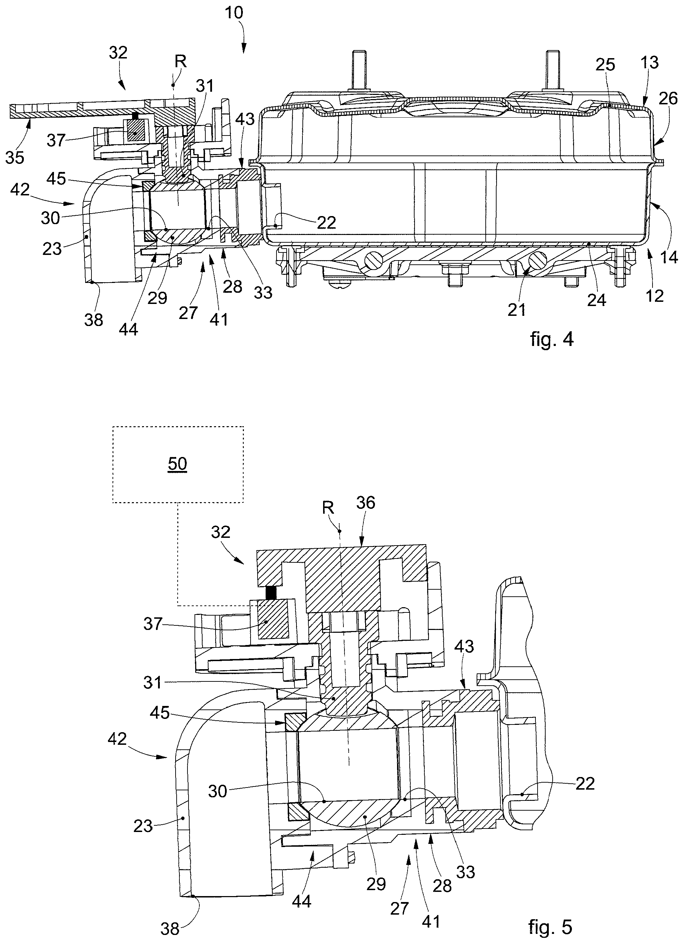

Embodiments described here in figs. 1-5 concern a boiler 10 to generate steam and/or to heat water.

Without any limitation to the present invention, the boiler 10 can be used for household appliances or professional machines, such as, for example, apparatuses for ironing or cleaning, coffee machines, steamers for cooking food, steam ovens, or any other apparatus that needs the boiler 10.

The boiler 10 comprises a metal container 12 suitable to contain the water and possibly also to transform it into steam.

The container 12 has a bottom wall 24, an upper wall 25 opposite the bottom wall 24 and at least one lateral wall 26 connected to the bottom wall 24 and to the upper wall 25.

In this case, the bottom wall 24 and the upper wall 25 have an at least partly circular surface.

The container 12, in this case, comprises two shells, an upper shell 13 and a lower shell 14, hermetically closed or closable.

The container 12 is provided with at least one feed aperture 15 to introduce water into the container 12.

According to one embodiment shown by way of example in fig. 1, the boiler 10 can comprise an automatic feed device 16 hydraulically connected to the feed aperture 15 and configured to introduce the water inside the container 12.

In accordance with possible solutions, the feed device 16 can comprise a tank 17 to contain the water and a feed pump 18 provided to extract the water from the containing tank 17 and to transfer it to the container 12.

The container 12, in the solution shown, can also be provided with a delivery aperture 19 to deliver the steam generated inside the container 12.

The steam delivery aperture 19 can be connected to steam user devices, and devices to possibly regulate the steam, for example an electromechanical valve 20, or suchlike.

The boiler 10 comprises at least one heating element 21 associated with the container 12 and configured to heat the water inside it to the desired temperature.

In accordance with a possible solution of the present invention, the heating element 21 can be installed integrally in contact with the container 12 so that the heating element 21 heats the container 12 by heat conduction and, therefore, the water contained therein.

According to a preferred solution, the heating element 21 can be positioned outside the container 12. In this way, the heating element 21 is prevented from being affected by the formation of limescale.

According to a variant embodiment, not shown, the heating element 21 can be installed inside the container 12.

The container 12 is provided with a discharge aperture 22 which can be selectively opened/closed to discharge water and possible particles, for example the limescale that has formed in the container 12.

The discharge aperture 22 can be made on the lateral wall 26 of the container 12 (as shown in the drawings) even if a different positioning is not excluded, for example in correspondence with the bottom wall 24 of the container 12.

According to a preferred solution, the discharge aperture 22 can be disposed on a lower portion of the lateral wall 26 in proximity to the bottom wall 24 of the container 12.

In this way, it is possible to exploit the force of gravity to promote the exit of the water and of possible solid particles and/or aggregates from the container 12 and also to guarantee a substantially complete emptying of the container 12, as the discharge aperture 22 is disposed below the average water level. Furthermore, the user does not have to intervene to shake and/or tilt the boiler 10 in order to facilitate the emptying of the container 12.

In order to further promote the exit of the water from the container 12, it is possible to enclose the boiler 10 inside a support body so that it is slightly inclined downward on the side where there is the discharge aperture 22. In this way, moreover, the boiler 10 will not have an excessive bulk in height.

The boiler 10 comprises a discharge collector 23 connected to the discharge aperture 22 and defining a discharge channel 33.

The channel 33 is configured to be passed through by the water and possible solid particles and/or aggregates.

According to a preferred embodiment, the channel 33 is inclined and has an exit aperture 38, opposite the discharge aperture 22 of the container 12, facing downward.

In this way, advantageously, the exit of the water and of possible solid particles and/or aggregates is further promoted by the inclination of the channel 33, which has the exit aperture 38 disposed below the average water level.

According to the invention, the discharge collector 23 is L-shaped.

In accordance with the above embodiment, the discharge collector 23 can be defined by a first segment 41 and a second segment 42. The first segment 41 is connected to the discharge aperture 22 in correspondence with a first terminal end 43.

According to some embodiments, the first segment 41 extends substantially coaxial to the discharge aperture 22, in a substantially horizontal and substantially radial direction with respect to the container 12.

According to the invention, the first terminal end 43 has an internal thread in the channel 33.

In this way, the first segment 41 is connected to the container 12 in correspondence with the discharge aperture 22 by screwing it until it is sealed.

The first segment 41 is connected to the second segment 42 in correspondence with a second terminal end 44, opposite the first terminal end 43.

The second segment 42 is connected to the first segment 41 so as to define a substantial L shape facing toward the bottom of the discharge collector 23.

By "substantial L-shape" we mean that the first segment 41 and the second segment 42 are disposed in such a way as to form an angle comprised between 80° and 110° with respect to each other.

In this way, the exit aperture 38 of the channel 33, defined by a second end of the second segment 42, is at a lower height than the discharge aperture 22, thus promoting the discharge of the water and of possible particles.

According to some embodiments, the first segment 41 can extend substantially orthogonal to the lateral wall of the container 12.

According to some embodiments, the first segment 41 is slightly inclined downward with respect to the discharge aperture 22 and toward the second segment 42, so as to further facilitate the emptying of the container 12 and of the channel 33 itself.

According to possible variant embodiments, the second segment 42 can extend in a substantially vertical direction.

According to some embodiments, the first segment 41 and the second segment 42 can be orthogonal to one another.

According to the invention, the discharge collector 23 is provided with a sealing gasket 45, for example an O-ring, disposed between the first segment 41 and the second segment 42.

According to some embodiments, the first segment 41 and the second segment 42 can be releasably connected to each other, for example by geometric coupling, or by shape coupling, by screwing, by bayonet coupling means or by removable attachment members such as for example screws, pins, bolts, and suchlike. In this way it is also possible to clean the channel 33 and/or possibly replace the sealing gasket 45.

In this way, advantageously, the channel 33 made by the connection of the first segment 41 and the second segment 42 is sealed to prevent accidental leaks of water which could entail a potential risk of scalding for a user.

The boiler 10 comprises a valve device 27 associated with the discharge collector 23 and configured to selectively open/close the channel 33.

The valve device 27 can comprise a main body 28.

According to some embodiments, the main body 28 can be disposed or integrated in the discharge collector 23.

Preferably the main body 28 is disposed in the first segment 41 of the discharge collector 23.

According to a variant embodiment, the main body 28 can be made of metal or heat-resistant material, or any metal resistant to high temperatures and pressures.

According to another variant embodiment, the main body 28 can be made of heat-resistant plastic material.

The valve device 27 can also comprise a shutter element 29 disposed in the main body 28 and mobile with respect to the latter.

The shutter element 29 is configured to assume a position obstructing the discharge aperture 22, that is, closing the valve device 27, a plurality of intermediate positions for the partial opening of the discharge aperture 22, that is, a partial opening of the valve device 27, and a position where the discharge aperture 22 is completely open, that is, where the valve device 27 is completely open.

According to some embodiments, the shutter element 29 is provided with a through hole 30 configured to define a section through which water and possible particles can pass.

According to some embodiments, the shutter element 29 is configured to rotate around an axis of rotation R with respect to the main body 28.

The through hole 30 is configured, during use and in the fully open position, to be coaxial with the discharge aperture 22. In this way, the through hole 30 and the channel 33 define a channel for the continuous passage of the water and possible limescale particles to be discharged.

In the partly open condition of the discharge aperture 22, the through hole 30 defines a section for the partial passage of the water in the event that the flow rate of the water and possible particles exiting from the container 12 is to be divided.

According to the position of the shutter element 29 with respect to the main body 28, therefore, a variable passage section of the channel 33 is defined.

According to some embodiments, the shutter element 29 is configured to exert a mechanical action to remove the limescale in the channel 33 during its rotation.

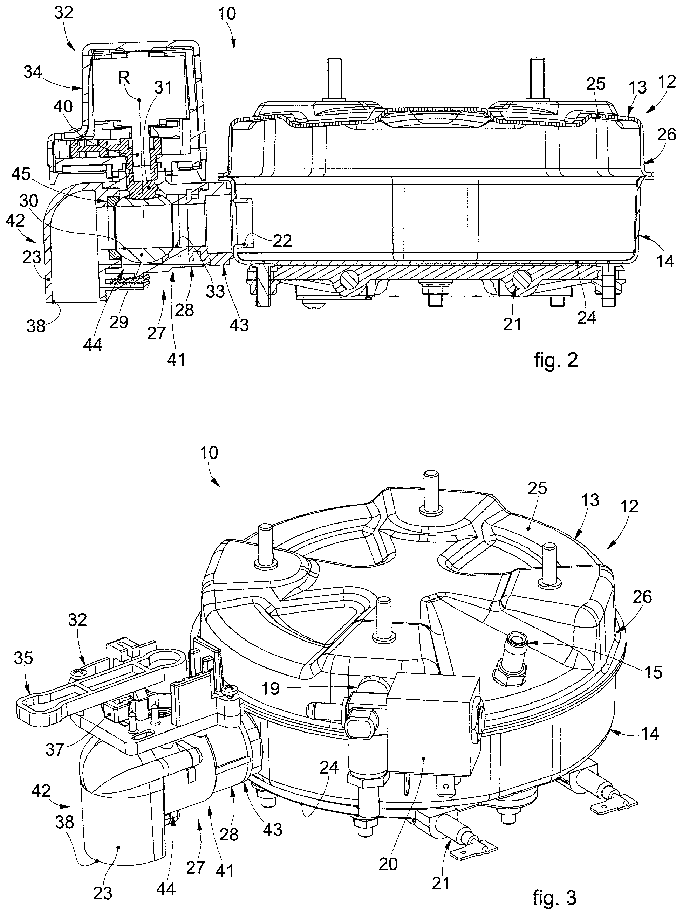

According to a preferred solution, the shutter element 29 can be a sphere rotatable around the axis of rotation R (figs. 2, 4 and 5) and can be installed inside a water passage pipe.

In this way, when the water level inside the container 12 is higher than the discharge aperture 22, or when the container 12 is inclined, the valve device 27 is not subjected to stresses due to the impact of the flow of the water and possible particles against the shutter element 29.

The shutter element 29 can be configured to rotate from one position to the other by up to an angle of about 90°.

The valve device 27 also comprises a rotating shaft 31 configured to make the shutter element 29 selectively rotate.

The rotating shaft 31 also rotates around the axis of rotation R.

The shutter element 29 is connected in correspondence with one end of the rotating shaft 31.

In the embodiment shown, the boiler 10 comprises a container 39 to collect the water and possible particles exiting from the container 12 through the discharge aperture 22.

In one embodiment, the collection container 39 can be connected to the discharge collector 23 in a sealed manner.

In this way, advantageously, the operation to discharge the water and possible limescale particles can be carried out safely for the user without the risk of accidental splashes.

In accordance with embodiments described here, the discharge collector 23, L-shaped and also having the exit aperture 38 facing downward, is oriented to convey the water, and possible particles, toward the collection container 39.

According to one embodiment, shown by way of example in fig. 1, the collection container 39 can comprise a sensor element 46 configured to detect the level of water and possible particles inside the collection container 39.

The valve device 27 comprises an actuator device 32 connected to a second end of the rotating shaft 31 to make the shutter element 29 rotate.

According to a variant embodiment, shown by way of example in figs. 1 and 2, the actuator device 32 can be an electric gear motor 34 configured to make the shutter element 29 rotate.

The electric gear motor 34 is provided with a rotating shaft 40 configured to connect directly to the rotating shaft 31 and make the shutter element 29 rotate.

For example, the rotating shaft 40 can be keyed to the rotating shaft 31.

The electric gear motor 34 is configured to automatically actuate the valve device 27 when an electric current is supplied.

By way of example only, the electric gear motor 34 can be activated by a user by means of a switch, or it can be conditioned by an automatic device which drives the electric gear motor 34 after a certain time interval has elapsed, or based on the volume of water entering into the container 12.

According to some embodiments, the boiler 10 comprises a control and command unit 50, configured to control the functioning of the different components. The control and command unit 50 can be connected to a plurality of detection devices of the boiler 10, for example, suitable to detect the pressure and/or temperature inside the container 12, or the water level, or other parameters, and to regulate the functioning of the boiler 10 accordingly.

The control and command unit 50 can also receive a command from a user by means of a switch to perform the discharge operations of the boiler 10 and to consequently command the electric gear motor 34 to drive the valve device 27.

According to another variant embodiment, shown by way of example in figs. 3 to 5, the actuator device 32 can be a lever 35 which can be driven manually by a user.

According to one embodiment, the lever 35 can be connected directly to the rotating shaft 31 in correspondence with its second end.

According to another embodiment, the lever 35 can be connected by means of return mechanisms to the rotating shaft 31 to reduce the effort exerted by the user.

According to preferred methods of use, the lever 35 can be replaced by a knob 36.

In accordance with embodiments described here, the valve device 27 can comprise a safety element 37 configured to selectively prevent the drive of the actuator device 32.

According to a preferred solution, the safety element 37 is configured to interfere with the lever 35, or with the knob 36, and thus prevent a user from driving the valve device 27.

According to some embodiments, the safety element 37 can be connected to the control and command unit 50 and be activated by the latter when one or more of either the temperature or the pressure inside the container 12 exceed a defined threshold level, so as to prevent safety problems for the user.

For example, the safety element 37 can interfere with the lever 35, or with the knob 36, when the temperature of the container 12 and/or of the heating element 21 is higher than 50°.

In this way, the safety element 37 prevents the valve device 27, in particular the shutter element 29, from being rotated in the discharge position of the water in dangerous conditions for the user, for example when the water has a high temperature and/or pressure inside the container 12.

According to a variant embodiment, the safety element 37 can be a thermosensitive element which is driven as a function of the temperature of the container 12 and/or of the heating element 21.

It is clear that modifications and/or additions of parts can be made to the boiler 10 as described heretofore, without departing from the field and scope of the present invention.

It is also clear that, although the present invention has been described with reference to some specific examples, a person of skill in the art shall certainly be able to achieve many other equivalent forms of boiler 10, having the characteristics as set forth in the claims and hence all coming within the field of protection defined thereby.

In the following claims, the sole purpose of the references in brackets is to facilitate reading and they must not be considered as restrictive factors with regard to the field of protection claimed in the specific claims.

## Claims

1. Boiler to generate steam and/or to heat water comprising:
- a metal container (12) provided with at least one feed aperture (15) to introduce water inside it, a discharge aperture (22) and a steam delivery aperture (19),
- at least one heating element (21) associated with the container (12),
- a discharge collector (23) connected to the discharge aperture (22) and defining a discharge channel (33) for the water and any possible solid particles and/or aggregates and
- a valve device (27) associated with said discharge collector (23) and configured to selectively open/close said channel (33), said discharge aperture (22) is disposed on a lower portion of a lateral wall (26) of said container (12) and said discharge collector (23) is substantially L-shaped **characterized in that** said discharge aperture (22) comprises a first segment (41) slightly inclined or substantially horizontal, connected to the discharge aperture (22), said first segment (41) is provided with a first terminal end (43) having an internal thread in the channel (33) for screwing said first segment (41) to the container (12), and a second segment (42) connected to the first segment (41) in correspondence with a second terminal end (44), opposite to the first terminal end (43), and disposed substantially L-shaped with respect to the latter, so as to define an exit aperture (38) of said channel (33) positioned, during use, below said discharge aperture (22) and facing downward, wherein a sealing gasket (45) is disposed between said first segment (41) and said second segment (42).

2. Boiler as in claim 1, **characterized in that** said valve device (27) comprises a main body (28) disposed in said discharge collector (23), a shutter element (29) provided with a through hole (30), and a rotating shaft (31) configured to selectively make said shutter element (29) rotate with respect to said main body (28) around an axis of rotation (R) at least between a position in which said through hole (30) is coaxial to said channel (33) and a position in which said through hole (30) is transverse to said channel (33).

3. Boiler as in claim 2, **characterized in that** said channel (33) has a passage section that varies as a function of the position of said shutter element (29) with respect to said main body (30).

4. Boiler as in claim 2 or 3, **characterized in that** said shutter element (29) is configured to exert a mechanical action to remove the limescale from said channel (33) during its rotation.

5. Boiler as in any of the claims from 2 to 4, **characterized in that** said shutter element (29) has a round shape.

6. Boiler as in any claim hereinbefore, **characterized in that** it comprises a collection container (39) for the water and possible particles exiting from said container (12) through said discharge aperture (22), said collection container (39) being connected to said discharge collector (23) in a sealed manner.

7. Boiler as in claim 6, **characterized in that** said collection container (39) comprises at least a sensor element (46) configured to detect a level of water and/or any possible solid particles inside said collection container (39).

8. Boiler as in any claim hereinbefore, **characterized in that** said first segment (41) of said channel (33) is inclined downward.

9. Boiler as in any of the claims from 2 to 8, **characterized in that** said valve device (27) is provided with an actuator device (32) connected to said rotating shaft (31) to make said shutter element (29) rotate.

10. Boiler as in claim 9, **characterized in that** said actuator device (32) is an electric gear motor (34) which can be driven automatically.

11. Boiler as in claim 9, **characterized in that** said actuator device (32) is a lever (35), or a knob (36), which can be driven manually by a user to rotate said shutter element (29).

12. Boiler as in any of the claims from 9 to 11, **characterized in that** said valve device (27) comprises a safety element (37) configured to selectively prevent the drive of said actuator device (32) when one or more of either the temperature or pressure of the water and/or steam in said container (12) exceeds a defined threshold level.

13. Boiler as in any claim from 2 to 12, **characterized in that** said main body (28) is made of a heat-resistant plastic material.

## Patentansprüche

1. Kessel zur Dampferzeugung und/oder zum Erhitzen von Wasser, umfassend:
- einen Metallbehälter (12), der mit mindestens einer Zufuhröffnung (15) zum Einführen von Wasser in den Behälter, einer Ableitungsöffnung (22) und einer Dampfabgabeöffnung (19) versehen ist,
- mindestens ein Heizelement (21), das mit dem Behälter (12) verbunden ist,
- einen Ableitungssammler (23), der mit der Ableitungsöffnung (22) verbunden ist und einen Ableitungskanal (33) für das Wasser und etwaige Feststoffteilchen und/oder Aggregate definiert, und
- eine Ventilvorrichtung (27), die mit dem Ableitungssammler (23) verbunden und so konfiguriert ist, dass sie den Kanal (33) selektiv öffnet/schließt, wobei die Ableitungsöffnung (22) an einem unteren Abschnitt einer Seitenwand (26) des Behälters (12) angeordnet ist und der Ableitungssammler (23) im Wesentlichen L-förmig ist, **dadurch gekennzeichnet, dass** die Ableitungsöffnung (22) ein erstes Segment (41) umfasst, das leicht geneigt oder im Wesentlichen horizontal ist und mit der Ableitungsöffnung (22) verbunden ist, wobei das erste Segment (41) mit einem ersten Anschlussende (43) versehen ist, das ein Innengewinde in dem Kanal (33) zum Anschrauben des ersten Segments (41) an den Behälter (12) aufweist, und ein zweites Segment (42) umfasst, das, mit einem dem ersten Anschlussende (43) entgegengesetzten zweiten Anschlussende (44) mit dem ersten Segment (41) verbunden und in Bezug auf das erste Anschlussende im Wesentlichen L-förmig angeordnet ist, so dass eine Ausgangsöffnung (38) des Kanals (33) definiert wird, die während des Gebrauchs unterhalb der Ableitungsöffnung (22) positioniert und nach unten gerichtet ist, wobei eine Dichtung (45) zwischen dem ersten Segment (41) und dem zweiten Segment (42) angeordnet ist.

2. Kessel nach Anspruch 1, **dadurch gekennzeichnet, dass** die Ventilvorrichtung (27) einen Hauptkörper (28), der in dem Ableitungssammler (23) angeordnet ist, ein Verschlusselement (29), das mit einem Durchgangsloch (30) versehen ist, und eine Drehwelle (31) umfasst, die so konfiguriert ist, dass sie das Verschlusselement (29) in Bezug auf den Hauptkörper (28) um eine Drehachse (R) selektiv zumindest zwischen einer Position, in der das Durchgangsloch (30) koaxial zu dem Kanal (33) vorliegt, und einer Position, in der das Durchgangsloch (30) quer zu dem Kanal (33) vorliegt, in Drehung versetzt.

3. Kessel nach Anspruch 2, **dadurch gekennzeichnet, dass** der Kanal (33) einen Durchlassquerschnitt aufweist, der sich in Abhängigkeit von der Position des Verschlusselements (29) in Bezug auf den Hauptkörper (30) ändert.

4. Kessel nach Anspruch 2 oder 3, **dadurch gekennzeichnet, dass** das Verschlusselement (29) so konfiguriert ist, dass es eine mechanische Wirkung ausübt, um während seiner Drehung den Kalk aus dem Kanal (33) zu entfernen.

5. Kessel nach irgendeinem der Ansprüche 2 bis 4, **dadurch gekennzeichnet, dass** das Verschlusselement (29) eine runde Form aufweist.

6. Kessel nach irgendeinem vorhergehenden Anspruch, **dadurch gekennzeichnet, dass** er einen Sammelbehälter (39) für das Wasser und etwaige Partikel, die aus dem Behälter (12) durch die Ableitungsöffnung (22) austreten, umfasst, wobei der Sammelbehälter (39) abdichtend mit dem Ableitungssammler (23) verbunden ist.

7. Kessel nach Anspruch 6, **dadurch gekennzeichnet, dass** der Sammelbehälter (39) mindestens ein Sensorelement (46) umfasst, das so konfiguriert ist, dass es einen Wasserstand und/oder etwaige Feststoffteilchen innerhalb des Sammelbehälters (39) erfasst.

8. Kessel nach irgendeinem vorhergehenden Anspruch, **dadurch gekennzeichnet, dass** das erste Segment (41) des Kanals (33) nach unten geneigt ist.

9. Kessel nach irgendeinem der Ansprüche 2 bis 8, **dadurch gekennzeichnet, dass** die Ventilvorrichtung (27) mit einer Betätigungsvorrichtung (32) versehen ist, die mit der Drehwelle (31) verbunden ist, um das Verschlusselement (29) in Drehung zu versetzen.

10. Kessel nach Anspruch 9, **dadurch gekennzeichnet, dass** die Betätigungsvorrichtung (32) ein elektrischer Getriebemotor (34) ist, der automatisch angetrieben werden kann.

11. Kessel nach Anspruch 9, **dadurch gekennzeichnet, dass** die Betätigungsvorrichtung (32) ein Hebel (35) oder ein Knopf (36) ist, der von einem Benutzer manuell betätigt werden kann, um das Verschlusselement (29) zu drehen.

12. Kessel nach irgendeinem der Ansprüche 9 bis 11, **dadurch gekennzeichnet, dass** die Ventilvorrichtung (27) ein Sicherheitselement (37) umfasst, das so konfiguriert ist, dass es den Antrieb der Betätigungsvorrichtung (32) selektiv verhindert, wenn die Temperatur und/oder der Druck des Wassers und/oder des Dampfes in dem Behälter (12) einen bestimmten Schwellenwert überschreitet.

13. Kessel nach irgendeinem der Ansprüche 2 bis 12, **dadurch gekennzeichnet, dass** der Hauptkörper (28) aus einem hitzebeständigen Kunststoffmaterial gefertigt ist.

## Revendications

1. Chaudière pour générer de la vapeur et/ou pour chauffer de l'eau comprenant :
- un contenant métallique (12) pourvu d'au moins une ouverture d'alimentation (15) pour introduire de l'eau à l'intérieur de celui-ci, une ouverture de décharge (22) et d'une ouverture de distribution de vapeur (19),
- au moins un élément chauffant (21) associé au contenant (12),
- un collecteur de décharge (23) connecté à l'ouverture de décharge (22) et définissant un canal de décharge (33) pour l'eau et d'éventuelles particules solides et/ou agrégats et
- un dispositif de vanne (27) associé audit collecteur de décharge (23) et configuré pour ouvrir/fermer sélectivement ledit canal (33), ladite ouverture de décharge (22) est disposée sur une partie inférieure d'une paroi latérale (26) dudit contenant (12) et ledit collecteur de décharge (23) est sensiblement en forme de L, **caractérisée en ce que** ladite ouverture de décharge (22) comprend un premier segment (41) légèrement incliné ou sensiblement horizontal, connecté à l'ouverture de décharge (22), ledit premier segment (41) est pourvu d'une première extrémité de borne (43) présentant un filetage interne dans le canal (33) pour visser ledit premier segment (41) sur le contenant (12), et un second segment (42) connecté au premier segment (41) en correspondance avec une seconde extrémité de borne (44), opposée à la première extrémité de borne (43), et disposé sensiblement en forme de L par rapport à celle-ci, de manière à définir une ouverture de sortie (38) dudit canal (33) positionnée, en utilisation, au-dessous de ladite ouverture de décharge (22) et orientée vers le bas, dans laquelle un joint d'étanchéité (45) est disposé entre ledit premier segment (41) et ledit second segment (42).

2. Chaudière selon la revendication 1, **caractérisée en ce que** ledit dispositif de vanne (27) comprend un corps principal (28) disposé dans ledit collecteur de décharge (23), un élément obturateur (29) pourvu d'un trou traversant (30), et un arbre rotatif (31) configuré pour faire tourner sélectivement ledit élément obturateur (29) par rapport audit corps principal (28) autour d'un axe de rotation (R) au moins entre une position dans laquelle ledit trou traversant (30) est coaxial audit canal (33) et une position dans laquelle ledit trou traversant (30) est transversal audit canal (33).

3. Chaudière selon la revendication 2, **caractérisée en ce que** ledit canal (33) présente une section de passage qui varie en fonction de la position dudit élément obturateur (29) par rapport audit corps principal (30).

4. Chaudière selon la revendication 2 ou 3, **caractérisée en ce que** ledit élément obturateur (29) est configuré pour exercer une action mécanique afin d'éliminer le calcaire à partir dudit canal (33) pendant sa rotation.

5. Chaudière selon l'une quelconque des revendications 2 à 4, **caractérisée en ce que** ledit élément obturateur (29) présente une forme arrondie.

6. Chaudière selon l'une quelconque des revendications précédentes, **caractérisée en ce qu'**elle comprend un contenant de collecte (39) pour l'eau et les éventuelles particules sortant dudit contenant (12) à travers ladite ouverture de décharge (22), ledit contenant de collecte (39) étant connecté audit collecteur de décharge (23) de manière étanche.

7. Chaudière selon la revendication 6, **caractérisée en ce que** ledit contenant de collecte (39) comprend au moins un élément capteur (46) configuré pour détecter un niveau d'eau et/ou de quelconques particules solides éventuelles à l'intérieur dudit contenant de collecte (39).

8. Chaudière selon l'une quelconque des revendications précédentes, **caractérisée en ce que** ledit premier segment (41) dudit canal (33) est incliné vers le bas.

9. Chaudière selon l'une quelconque des revendications 2 à 8, **caractérisée en ce que** ledit dispositif de vanne (27) est muni d'un dispositif actionneur (32) connecté audit arbre rotatif (31) pour faire tourner ledit élément obturateur (29).

10. Chaudière selon la revendication 9, **caractérisée en ce que** ledit dispositif actionneur (32) est un moteur à engrenage électrique (34) qui peut être entraîné automatiquement.

11. Chaudière selon la revendication 9, **caractérisée en ce que** ledit dispositif actionneur (32) est un levier (35), ou un bouton (36), qui peut être entraîné manuellement par un utilisateur pour faire tourner ledit élément obturateur (29).

12. Chaudière selon l'une quelconque des revendications 9 à 11, **caractérisée en ce que** ledit dispositif de vanne (27) comprend un élément de sécurité (37) configuré pour empêcher de manière sélective l'entraînement dudit dispositif actionneur (32) lorsqu'une ou plusieurs parmi la température ou la pression de l'eau et/ou la vapeur dans ledit contenant (12) dépassent un niveau de seuil défini.

13. Chaudière selon l'une quelconque des revendications 2 à 12, **caractérisée en ce que** ledit corps principal (28) est réalisé en une matière plastique résistant à la chaleur.
